# EUROPEAN PATENT APPLICATION

(11) **EP 1 840 710 A2**
(43) Date of publication of application: **03.10.2007**
(21) Application number: 06255471.2
(22) Date of filing: 24.10.2006
(51) Int. Cl.: G06F 3/033

(54) **Rotary input apparatus**

(30) Priority: 29.03.2006 KR 20060028342; 20.04.2006 KR 20060035589
(71) Applicant: Samsung Electro-Mechanics Co., Ltd, Yeongtong-gu Suwon-si Gyeonggi-do 443-743 (KR)
(72) Inventor: Kang, Eung-Cheon;109-307 Neubeot maeul Shinchang, Hwaseong-si;Gyeonggi-do 445-974 (KR); Lee, Sang-Jin, Gwanak-gu Seoul 151-782 (KR)
(74) Representative: Mounteney, Simon James

(57) **Abstract**

A rotary input apparatus comprising a wheel in the center of which is formed an insertion hole and along the edge of which is formed in a wheel light transmission portion; a center key, inserted into the insertion hole, along the edge of which is formed a center light transmission portion; a magnet, joined to a surface of the wheel to co-operate with the wheel, which is magnetized to have alternating N- and S-poles; a detection element, positioned facing the magnet, which detects the rotation of the magnet; a light emission part, which diffuses light to the exterior through the wheel and the center key; a printed circuit board, on which are mounted the detection element and the light emission part; a base having the printed circuit board secured to its surface; and a holder joined to the base and interposed between the wheel and the base to rotatably support the wheel, the wheel and center key are illuminated by a light emission part, to provide improved convenience and greater aesthetic value.

## Description

### BACKGROUND

### 1. Technical Field

The present invention relates to a rotary input apparatus.

### 2. Description of the Related Art

In general, a mobile terminal has the numbers 0-9 and the symbols * and # on a keypad of 12 keys. In addition to the numbers, there are also alphabet letters as well as consonants and vowels of Korean (or other) letters marked on such a keypad, to enable the input of information including numbers and letters. Recently, there are also navigation keys formed above the keypad equipped with a variety of functions, such as searching phone numbers, writing and managing text messages, and connecting to the Internet, etc. There are various forms of navigation keys, such as button types and rotary types, etc., but the use of rotary input apparatus is currently increasing, as they enable various functions such as menu browsing, etc.

Rotary input apparatus are used in televisions, camcorders, and PDA's (personal digital assistants), etc., as input apparatus in the form of rotary switches, rotary encoders, and rotary volume dials, etc.

In a conventional rotary input apparatus, several switches are formed on a base, and a rotational body, having a center switch inserted in its center, is inserted in and secured to the base. The center switch has a pressing protrusion and the rotational body has a plurality of protrusions, and the pressing protrusion and protrusions touch switches, whereby the center switch and rotational body are supported with a gap from the base.

Therefore, in such a rotary input apparatus using pressing protrusions and protrusions, the center switch and rotational body are supported entirely by the push resistance strength of the switches, so that not only is the structure weak, but also there are problems of malfunctioning due to the switches being activated with even a slight impact. Also, since the center switch is inserted in the rotational body in the conventional rotary input apparatus described above, the center switch is rotated in accordance with the rotation of the rotational body, so that if there is a text or a logo, etc., marked on the surface of the center switch, the orientation of the text or logo is changed, causing a reduction in the overall aesthetic value.

Further, another conventional rotary input apparatus is equipped with a rotating key, composed of an upper case and a lower case, and a securing button inserted in the center of the rotating key. On the reverse side of the securing button is formed a support portion, where this support portion supports the securing button while in contact with a second dome switch. Also, there is a base plate having three support portions protruding upwards, supporting the rotating key while pressing this support portion and a first dome switch attached to the reverse side of the rotating key.

However, in a rotary input apparatus comprised as above, the rotating key and securing button are supported by the push resistance strength of the first dome switch or second dome switch, respectively, so that not only is the structure unstable, but also its joining structure is weak, whereby there are problems of malfunctioning due to switches being activated with even a slight impact. In addition, since the securing button is inserted and secured in a mounting hole while being caught on a first engaging ledge of the upper case, in the conventional rotary input apparatus described above, the securing button is rotated simultaneously with the rotation of the rotating key. Therefore, if there is a text or a logo, etc., marked on the surface of the securing button, the orientation of the text or logo is changed, causing a reduction in the overall aesthetic value.

Also, a conventional rotary input apparatus is not equipped with a light emitting device, so that not only is it inconvenient to use at night, but also it is lacking in aesthetic value.

### SUMMARY

The present invention aims to provide a rotary input apparatus, in which the wheel and center key are illuminated by a light emission part, to provide improved convenience and greater aesthetic value.

One aspect of the invention provides a rotary input apparatus comprising a wheel in the center of which is formed an insertion hole and along the edge of which is formed a wheel light transmission portion; a center key, inserted into the insertion hole, along the edge of which is formed a center light transmission portion; a magnet, joined to a surface of the wheel to co-operate with the wheel, which is magnetized to have alternating N- and S-poles; a detection element, positioned facing the magnet, which detects the rotation of the magnet; a light emission part, which diffuses light to the exterior through the wheel and the center key; a printed circuit board, on which are mounted the detection element and the light emission part; a base having the printed circuit board secured to its surface; and a holder joined to the base and interposed between the wheel and the base to rotatably support the wheel.

The rotary input apparatus according to embodiments of the invention may include one or more of the following features. For example, the holder may have at least one ledge and the wheel may have at least one securing protrusion protruding downwards, a washer having at least one rotation hole may be inserted onto the center hole, the at least one securing protrusion may be rotatably inserted in the rotation holes, and the light generated by the light emission part may be reflected by a surface of the washer and diffused.

Also, the washer may include a light reflective material, a reflective sheet may be stacked on the printed circuit board, and the light emission part may protrude to the exterior of the reflective sheet. The light emission part may be mounted on the printed circuit board in an area corresponding to an inner portion of the wheel, and the wheel or the center key may be manufactured from a light transmissive material.

Meanwhile, another aspect of the invention provides a rotary input apparatus comprising a rotatable wheel; a magnet joined to a surface of the wheel to co-operate with the wheel and magnetized to have alternating N- and S-poles; a detection element, positioned to face the magnet, which detects changes in magnetism of the magnet; a printed circuit board on which the detection element is mounted; a light emission part mounted on the printed circuit board; a control part which receives an external signal and controls the operation of the light emission part correspondingly; and a base to which the printed circuit board is secured.

The rotary input apparatus according to an aspect of the invention may include one or more of the following features. For example, the base may be joined to a mobile terminal, and the control part may be configured to receive an incoming call received by the mobile terminal. In this case, the control part may preferably output a control signal that makes the light emission part maintain a lighting operation when an incoming call is received, and may output a control signal that makes the light emission part perform a blinking operation when an incoming call is not received.

To maximize the visual effect, the wheel may include a transparent material, and the light emission part may be mounted on the printed circuit board in an area covered by the wheel. The light emission part may include at least one of an LED (light emitting diode) and organic EL (organic electroluminescence).

Additional aspects and advantages of the present invention will be set forth in part in the description which follows, and in part will be obvious from the description, or may be learned by practice of the invention.

### BRIEF DESCRIPTION OF THE DRAWINGS

Fig. 1 is a perspective view of a rotary input apparatus in an unassembled state according to a first disclosed embodiment of the invention.
Fig. 2 is a cross-sectional view of the rotary input apparatus in an assembled state across line I-I' of Fig. 1.
Fig. 3 is a cross-sectional view of the rotary input apparatus in an assembled state across line II-II' of Fig. 1.
Fig. 4 is a magnified cross-sectional view of portion "B" in Fig. 3.
Fig. 5 is a perspective view illustrating the state in which a logo marked on the surface of the center key is not rotated even with the rotation of the wheel, in a mobile terminal having a rotary input apparatus according to a first disclosed embodiment of the invention.
Fig. 6 is an exploded perspective view of a rotary input apparatus having a light emission part attached on the printed circuit board, according to a second disclosed embodiment of the invention.
Fig. 7 is a cross-sectional view of the rotary input apparatus across line III-III' of Fig. 6.
Fig. 8 is an exploded perspective view of a rotary input apparatus according to a third disclosed embodiment of the invention.
Fig. 9 is a cross-sectional view of a rotary input apparatus according to a third disclosed embodiment of the invention.
Fig. 10 is a block diagram illustrating the flow of signals in a rotary input apparatus according to a third disclosed embodiment of the invention.
Fig. 11 is a graph illustrating the forms of signals in a rotary input apparatus according to a third disclosed embodiment of the invention.

### DETAILED DESCRIPTION

Embodiments of the rotary input apparatus according to the invention will be described below in more detail with reference to the accompanying drawings. In the description with reference to the accompanying drawings, those components are rendered the same reference number that are the same or are in correspondence regardless of the figure number, and redundant explanations are omitted.

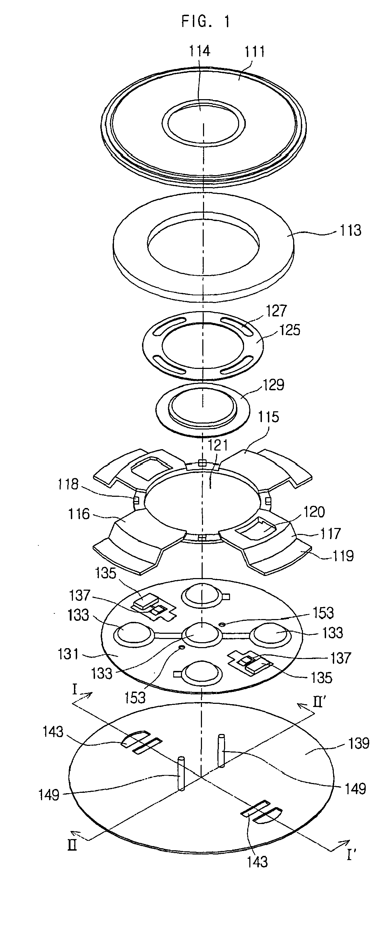

Referring to Figs. 1 to 3, a rotary input apparatus according to an embodiment of the invention comprises a rotatably joined wheel 111, a washer 125 which secures the wheel 111 to a holder 115, a center key 129 joined at the center of the wheel 111, a ring-shaped magnet 113 secured to the bottom of the wheel 111 which rotates together with the wheel 111, the holder 115 joined directly to the upper surface of a base 139 which rotatably supports the wheel 111, a printed circuit board 131 secured to the upper surface of the base 139, and Hall sensors 135 positioned in grooves of the printed circuit board 131 which are detection elements for sensing the rotation of the magnet 113. In order to prevent the rotation of the center key 129, there are support protrusions 149 protruding upwards on one side of the base 139, where the support protrusions 149 are inserted into securing grooves 147 on the reverse side of the center key 129 to prevent the rotation of the center key 129.

Since, in the rotary input apparatus according to this embodiment, the support protrusions 149 are inserted into the securing grooves 147 formed on the reverse side of the center key 129, the center key 129 is not rotated in spite of the rotation of the wheel 111. Therefore, in cases where there is a logo or a text marked on the surface of the center key 129, the aesthetic value may be increased, as the center key 129 is not rotated.

Also, since the rotary input apparatus according to this embodiment has the wheel 111 and the center key 129 secured by the holder 115, which is secured to the base 139, not only is it more solid compared to conventional rotary input apparatus, but also the dome switch 133 is activated only by definite pressing so that malfunctioning is avoided. Further, as the holder 115 which rotatably supports the wheel 111 is made of metal and secured directly to the base 139, it is returned to its original position by means of the elasticity of the holder 115 after the external force is removed, to provide a better tactile feel.

In the printed circuit board 131 having the Hall sensors 135, i.e. the detection elements, there are receiving holes 137 formed, in which at least portions of the Hall sensors 135 can be positioned, so that the thickness of the rotary input apparatus may be reduced by the depth of a receiving hole 137. Also, by additionally forming insertion holes 143 on the base 139 in which may be positioned the Hall sensors 135, i.e. the detection elements, the thickness of the rotary input apparatus may further be reduced by the depth of an insertion hole 143.

The wheel 111 is generally shaped as a circular plate, with an insertion hole 114 formed in the center through which the center key 129 may be inserted. The wheel 111 has a plurality of securing protrusions 112 adjacent to the insertion hole 114 that protrude downwards. As the securing protrusions 112 are inserted into the rotation holes 127 of the washer 125, the wheel 111 is rotatably secured to the holder 115. On the bottom surface of the wheel 111 is secured the magnet 113, which is magnetized to have multiple poles. The wheel 111 is rotated together with the magnet 113 by user operation, whereby a variety of inputs are made as the Hall sensors 135 sense the rotation angle, direction, and speed, etc., of the magnet 113. Also, a portion may be pressed by the user, so that a push protrusion formed on the reverse side of the holder 115 presses the upper surface of a dome button 133 to activate a separate function.

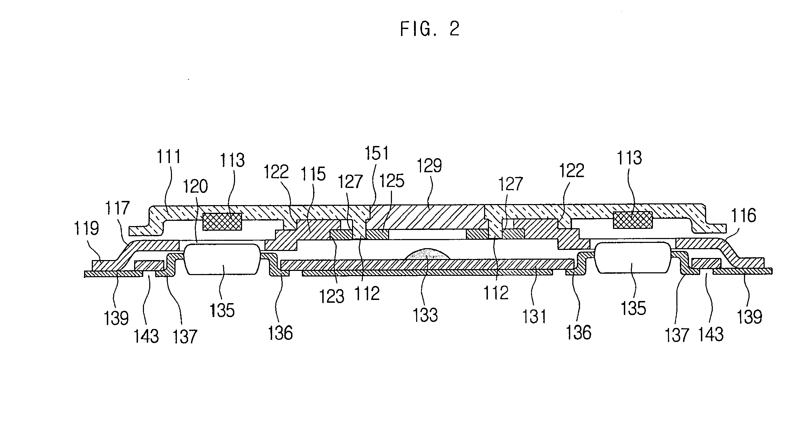

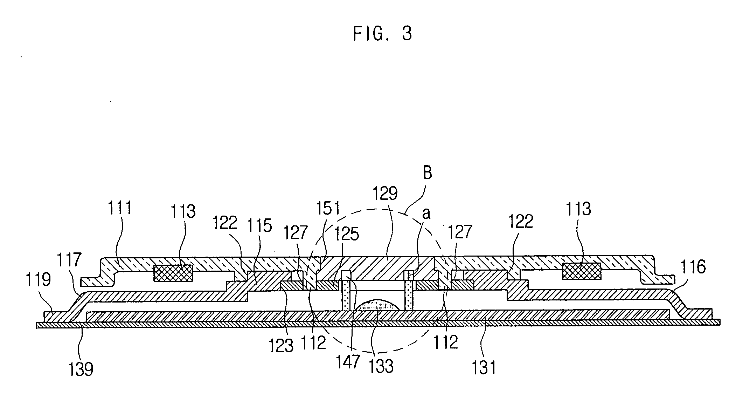

As illustrated in Figs. 2 and 3, there is a ledge 151 formed adjacent to the securing protrusions 112 around the insertion hole 114 of the wheel 111, where the center key 129 is caught on the ledge 151 so that the center key 129 is prevented from becoming detached. Also, since there is a particular gap (not shown) at the interface between the center key 129 and the wheel 111, the wheel 111 can be rotated in spite of the center key 129 which is secured by the support protrusions 149 and is thus not rotated.

The securing protrusions 112, as illustrated in Fig. 2, are inserted through the center hole 121 of the holder 115 and the rotation holes 127 of the washer 125, with the ends processed such that they are not detached from the rotation holes 127. The washer 125 is inserted and secured onto the center of the holder 115, whereby the wheel 111 is secured to the holder 115. The central angles of the rotation holes 127 through which the securing protrusions 112 are inserted define the angle by which the wheel 111 is able to rotate.

The magnet 113 is attached to the bottom surface of the wheel 111 to be rotated together with the wheel 111, and such rotation of the magnet 113 is sensed by the Hall sensors 135 for an input based on the rotation angle. The magnet 113 has the shape of a ring magnetized to have alternating N- and S-poles, and the Hall sensors 135 are able to detect the rotation angle, direction, and speed of the wheel 111 according to the changes in N- and S-poles above the Hall sensors 135.

The holder 115 is secured to one side of the base 139 and rotatably supports the wheel 111. The holder 115 may be made of metal, such as stainless steel, etc., so that when the particular force applied on the wheel 111 is removed, the wheel 111 is returned to its original position due to the elasticity of the holder 115 itself. The holder 115 may be formed by press processing, etc. Of course, the holder 115 may also be formed by plastics, etc., that are high in elasticity.

The holder 115 includes a ring-shaped body portion 118, and a support portion 116 protruding from the perimeter of the body portion 118 and secured to a side of the base 139. The body portion 118 has a center hole 121 in the middle, and the support portion 116 protruding in four directions around the center hole 121 comprises an inclination portion 117 protruding downwards in a particular inclination, and a securing portion 119 extending horizontally from the end of the inclination portion 117.

The inclination portion 117 protrudes outwards and connects the body portion 118 and the securing portion 119. Since the inclination portion 117 is formed by metal, etc., having elasticity, when an external force applied on the holder 115 is removed, the holder 115 is returned to its original position by means of the elasticity of the inclination portion 117. Thus, even when a particular portion of the wheel 111 is pressed so that the wheel 111 becomes tilted, this elasticity allows it to be restored to its original position. The securing portion 119 extends from the end of the inclination portion 117 and is secured to the upper surface of the base 139 to secure the holder 115. The securing portion 119 may be secured to the base 139 by means of adhesive or tape, etc.

Since the holder 115 is secured directly to a side of the base 139 by means of adhesive, etc., the rotary input apparatus according to this embodiment has superior endurance to external impact. Also, the elasticity of the holder 115, which is formed of metal, allows not only the holder 115 itself but also the wheel 111 to be restored to their original positions, to provide a better tactile feel.

In the support portion 116 are formed support portion holes 120. As illustrated in Fig. 2, a portion of the Hall sensor 135, i.e. the sensing means, may be positioned in the support portion hole 120. Also, the body portion 118 has ledges 123 formed adjacent to the center hole 121.

The support portion holes 120 in the support portion 116 are formed to correspond with the Hall sensors 135 mounted on the printed circuit board 131, and as illustrated in Fig. 2, hold portions of the Hall sensors 135. The center hole 121 is formed in the center of the holder 115. The wheel 111 is rotatably inserted onto a perimeter 122 forming the center hole 121, so that the wheel 111 is prevented from becoming detached. The ledges 123, as illustrated in Figs. 2 and 3, are formed adjacent to the center hole 121. The washer 125 is inserted and secured onto the ledges 123.

As illustrated in Fig. 1, the washer 125 is generally shaped as a donut, with a plurality of rotation holes 127 formed in certain intervals along the ring. The washer 125 is inserted and secured onto the ledges 123 to define the angle by which the wheel 111 is able to rotate. While there are four arc-shaped rotation holes 127 illustrated in this embodiment, the invention is not thus limited, and it is to be appreciated that the number and central angles of the rotation holes 127 may be changed according to design considerations. For example, one or two rotation holes 127 formed along the ring of the washer 125 with a central angle of 180° or 360° may be used for the rotation holes 127.

After the center key 129 is inserted through the insertion hole 114 of the wheel 111, it is caught on the ledge 151, with a particular tolerance formed between the outer perimeter of the center key 129 and the inner perimeter of the insertion hole 114 so as to allow the rotation of the wheel 111. The center key 129 is pressed by the user to perform a particular function, e.g. connecting to the Internet or receiving DMB (Digital Multimedia Broadcasting), etc.

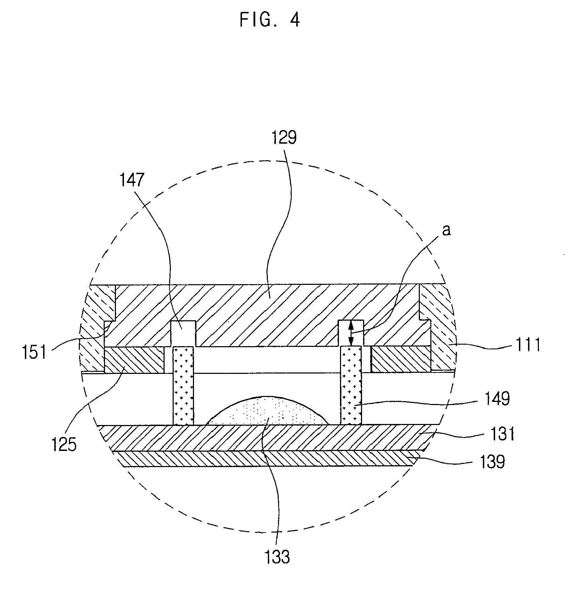

On the reverse side of the center key 129, as illustrated in Figs. 3 and 4, are formed securing grooves 147, in which portions of the support protrusions 149 are inserted to prevent the rotation of the center key 129. The securing grooves 147 are formed in correspondence with the positions and number of the support protrusions 149. Also, to allow the center key 129 to move downwards by a certain distance when pressed, there is a particular tolerance (a) formed between the bottom surface of the of the securing groove 147 and the end of the support protrusion 149. The tolerance (a) is greater than the vertical moving distance of the center key 129.

The printed circuit board 131 has the shape of a circular plate in correspondence with the base 139, with a plurality of dome buttons 133 formed on one side in correspondence with the push protrusions formed on the reverse side of the holder 115. Also, there are receiving holes 137 formed on the printed circuit board 131 in which at least portions of the Hall sensors 135 may be inserted. The printed circuit board 131 is formed with a diameter somewhat shorter than the diameter of the base 139, in order to allow a sufficient area where the securing portion 119 of the holder 115 may be secured.

Also formed on the printed circuit board 131 are holes 153 through which the support protrusions formed on the base 139 may be inserted. By inserting the support protrusions 149 through the holes 153, the printed circuit board 131 can be joined to the base 139 more firmly.

The dome buttons 133 are pressed by push protrusions (not shown) formed on the reverse side of the holder 115 to perform separate functions. While in this embodiment dome buttons 133 are illustrated that are pressed by the wheel 111, the invention is not thus limited, and any composition may be used in which certain pressing performs separate functions. For example, pressure sensors or contact sensors may also be used instead of the dome buttons 133.

The receiving holes 137 are formed in the printed circuit board 131 in correspondence with the support portion holes 120 of the holder 115, and as illustrated in Figs. 2 and 3, at least portions of the Hall sensors 135 are positioned in the receiving holes 137. Thus, compared to the case of mounting the Hall sensors 135 on the upper surface of the printed circuit board 131, the thickness of the input apparatus in the present embodiment may be reduced by the depth of a receiving hole 137.

The detection element may be a Hall sensor (Hall effect sensor), which is a silicon semiconductor using the effect of electromotive forces generated when electrons experience the Lorentz force in a magnetic field and their direction is curved. The Hall sensors generate electromotive forces that are proportional to the rotation of the magnet 113 attached to the wheel 111, which are transferred via the printed circuit board 131 to an outside control unit (not shown).

Of course, the detection element is not limited to a Hall sensor, and any element may be used which can detect the rotation of the magnet 113. For example, an MR (magneto-resistive) sensor or a GMR (giant magneto-resistive) sensor may be used for the detection element. An MR sensor or a GMR sensor is an element of which the resistance value is changed according to changes in the magnetic field, and utilizes the property that electromagnetic forces curve and elongate the carrier path in a solid to change the resistance. Not only are MR sensors or GMR sensors small in size with high signal levels, but also they have excellent sensitivity to allow operation in low-level magnetic fields, and they are also superior in terms of temperature stability.

When the detection element consists of Hall sensors 135, the Hall sensors 135 are secured to the printed circuit board 131 by leads 136, where the leads 136 are inserted through the insertion holes 143 of the base 139 and secured to the reverse side of the printed circuit board 131.

The base 139, as illustrated in Fig. 1, has the shape of a circular plate, and rotatably supports the holder 115 and the wheel 111. The diameter of the base 139 is formed to be somewhat longer than that of the printed circuit board 131. Also, insertion holes 143 are formed on the base 139 in correspondence with the receiving holes 137 of the printed circuit board 131. As illustrated in Fig. 3, portions of the Hall sensors 135 are positioned in the insertion holes 143, whereby the thickness of the rotary input apparatus may further be reduced by the depth of the insertion holes 143.

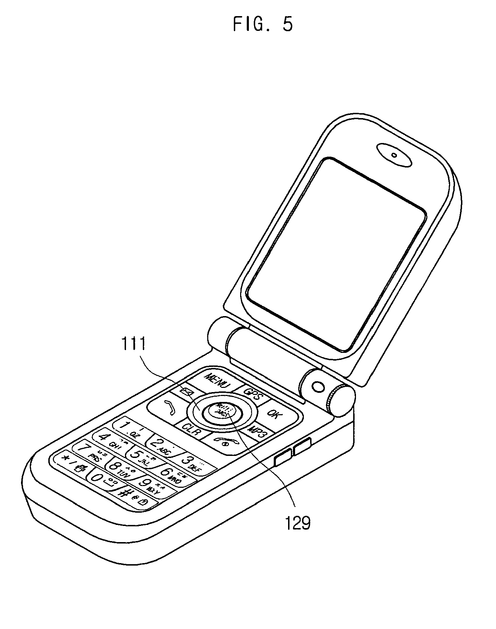

A pair of support protrusions 149 protruding upwards are formed on a side of the base 139, and portions of the support protrusions 149 are inserted in the securing grooves 147 to prevent the rotation of the center key 129. Thus, as illustrated in Fig. 5, in cases where there is a text or a logo marked on the surface of the center key 129, the center key 129 is not rotated in cooperation with the rotation of the wheel 111. Therefore, as the text or logo marked on the surface of the center key 129 is always kept at a constant orientation, its aesthetic quality may be maintained.

Below, a description will be given of the operation of a rotary input apparatus according to the present embodiment.

When a rotational force is applied by a user on an outer side of the center key 129, the wheel 111 is rotated while positioned on the perimeter 122 of the holder 115, which causes the magnet 113 to rotate together with the wheel 111. As the magnet 113 has a multiple number of alternately magnetized N- and S-poles, the Hall sensors 135 can sense the changes in poles due to the rotation of the magnet 113, to recognize the rotation direction, speed, and angle of the wheel 111. The Hall sensors 135 generate output signals corresponding to the rotation direction, rotation angle, and rotation speed of the wheel 111, which are transmitted via the printed circuit board 131 to an outside control unit, and the control unit identifies the output signals to perform an input corresponding to the rotation of the wheel 111.

Also, when an outer side of the center key 129 is pressed by a user, the wheel 111 is tilted in one direction while elastically supported by the holder 115, which causes a push protrusion (not shown) formed on the reverse side of the holder 115 to press a dome button 133. This allows each of the dome buttons 133 positioned on the printed circuit board 131 to perform its own function. For example, in the input apparatus illustrated in Figs. 1 to 3, there are four dome buttons 133 in equal intervals that can be pressed by the push protrusions, where each dome button 133 may function as a hot key for launching a text message function, searching phone numbers, connecting to the Internet, or receiving satellite broadcasts, etc.

In addition, the center key 129 may also perform a separate function when pressed by a user.

The user may execute another function by pressing the center key 129 formed in the center. While the center key 129 cannot be rotated because of the support protrusions 149, it can be moved in a vertical direction because of the tolerance (a) formed between the ends of the support protrusions 149 and the bottom surfaces of the securing grooves 147.

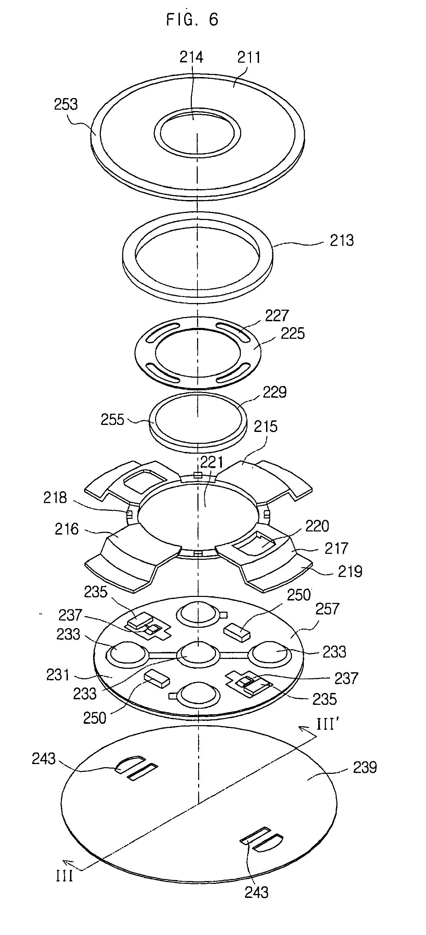

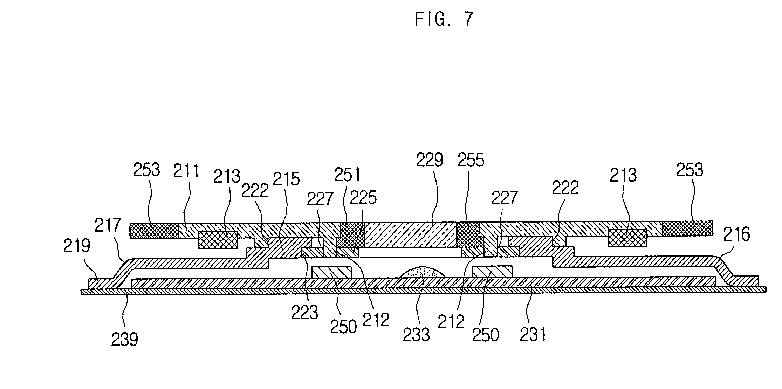

Below, a description will be given of a rotary input apparatus according to a second disclosed embodiment of the invention, with reference to Figs. 6 and 7.

Referring to Figs. 6 and 7, while the rotary input apparatus according to another embodiment of the invention is almost identical to the rotary input apparatus illustrated in Fig. 1, it is different in that there are light emission parts 250 mounted and a reflective sheet 257 stacked on the printed circuit board 231. The rotary input apparatus according to this embodiment is also different from the previous embodiment in that a center light transmission portion 255 is formed on the rim of the center key 229, and a wheel light transmission portion 253 is formed on the rim of the wheel 211.

As the joining composition and operation of the present embodiment having light emission parts 250 are almost identical to those of the embodiment illustrated in Fig. 1, the description below will focus only on the differences.

The light emission parts 250 are mounted on the printed circuit board 231, and with the input of control signals and an electrical current via the printed circuit board, project light to the wheel light transmission portion 253 and center light transmission portion 255. When the wheel 211 and the center key 229 are manufactured from transparent materials such as transparent ABS (acrylonitrile butadiene styrene), the light emission parts 250 also project light through the wheel 211 and the center key 229 to the exterior. Light emitting diodes (LED's), organic EL (electroluminescence), etc., may be used for the light emission parts 250, but they are not thus limited.

There may be one or two or more light emission parts 250 included on the printed circuit board 231. Also, the light emission parts 250 may be mounted on a region of the printed circuit board 231 corresponding to the inner portion of the wheel 211, that is, the region within half the radius of the wheel 211 from the center of the wheel 211, in order to prevent fire spots. If the light emission parts 250 were to be mounted in the outer portion of the printed circuit board 231, fire spots may occur, which give the appearance that light is gathered only at the portions where the light emission parts 250 are positioned.

The light from the light emission parts 250 are projected through the wheel light transmission portion 253 formed on the rim portion of the wheel 211 and through the center light transmission portion 255 formed on the rim portion of the center key 229 to the exterior. The wheel light transmission portion 253 and the center light transmission portion 255 correspond to the portions around the wheel 211 and the center key 229 where transparent materials have been formed by double molding. When the wheel 211 and/or the center key 229 are manufactured from transparent materials such as transparent ABS (acrylonitrile butadiene styrene), the light from the light emission parts 250 may also pass through the wheel 211 and the center key 229 to be projected to the exterior.

In order to diffuse the light from the light emission parts 250, a reflective sheet 257 may be stacked on the printed circuit board 231. A reflective surface is formed on the face of the reflective sheet 257, and the light from the light emission parts 250 is reflected by the reflective surface and projected to the exterior through the wheel light transmission portion 253 or the center light transmission portion 255, so that diffusion of the light is facilitated. A plurality of grooves are formed on the reflective sheet 257 in which to insert the dome buttons 233, Hall sensors 235, and light emission parts 250.

As illustrated in Fig. 7, while the washer 225, which secures the wheel 211 to the holder 215, has the same composition as that in the embodiment illustrated in Fig. 1, it may be manufactured with a metal having excellent surface illuminance, to further facilitate the diffusion of the light from the light emission parts 250. Examples of such a metal having excellent surface illuminance may include copper or aluminum, etc. Of course, the washer 225 is not limited to those made of metal, and it is to be appreciated that any composition may be used in which light from the light emission parts 250 is reflected and diffused to the exterior, for example, laminating a reflective film on the surface.

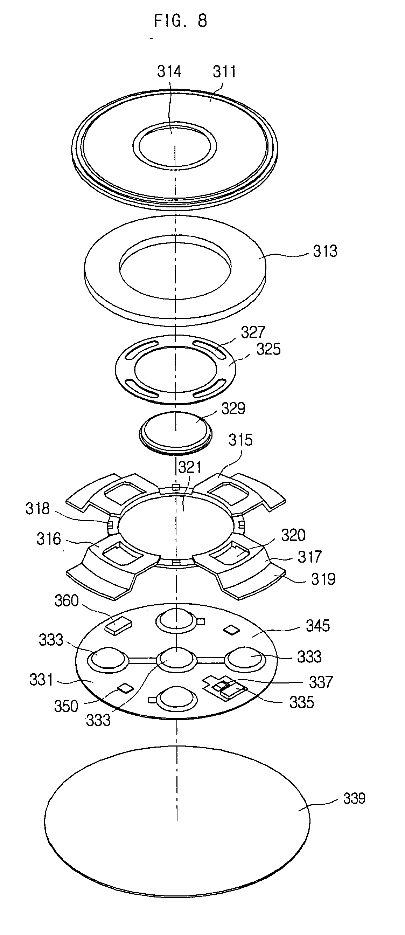

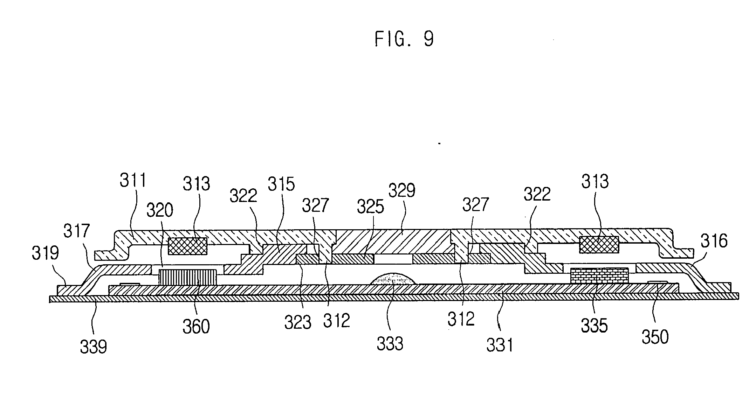

Next, a description will be given on a rotary input apparatus according to a third disclosed embodiment of the invention. Fig. 8 is an exploded perspective view of the rotary input apparatus according to a third disclosed embodiment of the invention, and Fig. 9 is a cross-sectional view of the rotary input apparatus according to the third disclosed embodiment of the invention. In Figs. 8 and 9 are illustrated a wheel 311, a center hole 314, a washer 325, a center key 329, a holder 315, fastening portions 317, holder holes 320, a center hole 321, a printed circuit board 331, dome buttons 333, a Hall sensor 335, light emission parts 350, a control part 360, a base 339, fastening holes 341, and insertion holes 343.

A rotary input apparatus according to the present embodiment comprises a rotatably joined wheel 311, a washer 325 defining the rotation angle of the wheel 311, a center key 329 joined at the center of the wheel 311, a ring-shaped magnet 313 secured to the bottom of the wheel 311 which rotates together with the wheel 311, a holder 315 joined to the base 339 which rotatably supports the wheel 311, a printed circuit board 331 joined to the upper surface of the base 339, a Hall sensor 335 positioned in a groove of the printed circuit board 331 which is a detection element for sensing the rotation of the magnet 313, a control part 360 positioned in another groove of the printed circuit board which receives and processes external signals and then transmits the processed signals, and light emission parts 350 positioned on the upper surface of the base 339 which emit light according to signals transmitted from the control part.

In the rotary input apparatus according to the present embodiment, the light emission parts 350 are mounted inside, and the control part 360 capable of controlling the operation of the light emission parts 350 is formed on the printed circuit board 331, so that external signals may be used to display the operational status of the device, such as a mobile terminal, etc., in which the rotary input apparatus is installed, or to accentuate design elements for providing the user with a variety of visual services.

The wheel 311 is generally shaped as a circular plate, with a center hole 314 formed in the center through which the center key 329 is inserted. The wheel 311 may have a plurality of securing protrusions adjacent to the center hole 314 that protrude downwards. The securing protrusions may be inserted into the center hole of the washer 325, so that the wheel 311 is secured to the holder 315. The wheel 311 is rotatably secured to the holder 315, and on the bottom surface of the wheel 311 is secured the magnet 313, which is magnetized to have multiple poles. The wheel 311 is rotated together with the magnet 313 by user operation, whereby a variety of inputs may be made as the Hall sensor 335 senses the rotation angle, direction, and speed, etc., of the magnet 313. Also, a portion may be pressed by the user, so that a push protrusion formed on the reverse side of the holder 315 presses the upper surface of a dome button 333 to activate a separate function.

The securing protrusions 312, as illustrated in Fig. 9, are inserted through the center hole 321 of the holder 315 and the rotation holes 327 of the washer 325. The washer 325 is inserted and secured onto the center of the holder 315, whereby the wheel 311 is secured to the holder 315. The central angle of the rotation holes 327 of the washer 325, through which the securing protrusions 312 are inserted, define the angle by which the wheel 311 is able to rotate.

The magnet 313 is attached to the bottom surface of the wheel 311 to be rotated together with the wheel 311, and such rotation of the magnet 313 is sensed by the Hall sensor 335 for an input based on the rotation angle. The magnet 313 may have the shape of a ring magnetized to have multiple poles, and the Hall sensor 335 may detect the rotation angle, direction, and speed of the wheel 311 according to the changes in N- and S-poles above the Hall sensor 335.

The holder 315 is secured to the base 339 and may rotatably support the wheel 311. Also, the holder 315 supports the wheel 311, such that when the particular force applied on the wheel 311 is removed, the wheel 311 is returned to its original position due to the elasticity of the holder 315 itself. As illustrated in Fig. 8, the holder 315 has a center hole 321 in the middle, and holder holes 320 are formed in fastening portions 317 that protrude in four directions around the center hole 321. The holder 315 also has ledges 323 formed adjacent the center hole 321.

The fastening portions 317 are protrusion portions formed in particular intervals around the holder 315, and as illustrated in Fig. 9, are inserted into the fastening holes 341 of the base 339 to prevent the base 339 from becoming detached. The fastening portions 317 are made of metal or plastic, etc., to have a certain degree of elasticity, and this elasticity enables the wheel 311 to recover its original position, even when a particular portion of the wheel 311 is pressed so that the wheel 311 becomes tilted.

The holder holes 320 formed in the fastening portions 317 are formed in correspondence with the Hall sensor 335 mounted on the printed circuit board 331, and as illustrated in Fig. 9, hold a portion of the Hall sensor 335. The center hole 321 is formed in the center of the holder 315. Also, the wheel 311 is rotatably inserted onto a perimeter 322 forming the center hole 321, to prevent the wheel 311 from becoming detached. The ledges 323, as illustrated in Fig. 9, are formed adjacent to the center hole 321, and the washer 325 may be inserted and secured onto the ledges 323.

As illustrated in Fig. 8, the washer 325 is generally shaped as a donut, with a plurality of rotation holes 327 formed in certain intervals along the ring. The washer 325 is inserted and secured onto the ledges 323 to define the angle by which the wheel 311 is able to rotate. While there are four arc-shaped rotation holes 327 illustrated in this embodiment, it is to be appreciated that the number and central angles of the rotation holes 327 may be changed according to design considerations. For example, one or two rotation holes 327 formed along the ring of the washer 325 with a central angle of 180° or 360° may be used for the rotation holes 327.

The center key 329 is inserted through the center hole 314 of the wheel 311 and is supported by elastic rubber (not shown), etc. The center key 329 is pressed by the user to perform a particular function, e.g. connecting to the Internet or receiving DMB (Digital Multimedia Broadcasting), etc.

The printed circuit board 331 may have the shape of a circular plate in correspondence with the base 339, with a plurality of dome buttons 333 formed on one side in correspondence with the push protrusions formed on the reverse side of the holder 315, as well as the light emission part 350 for emitting light and the control part 360 for controlling the operation of the light emission part 350.

The dome buttons 333 are pressed by push protrusions (not shown) formed on the reverse side of the holder 315 to perform separate functions. While in this embodiment, dome buttons 333 are illustrated that are pressed by the wheel 311, any composition may be used in which certain pressing performs separate functions. For example, pressure sensors or contact sensors may also be used instead of the dome buttons 333.

The light emission part 350 may comprise any one of LED's (light emitting diodes) or organic EL (organic electroluminescence), and may be mounted on the printed circuit board 331. While in this embodiment, there are two individual light emission parts 350 formed in symmetry about the dome buttons 333 formed on the center portion of the printed circuit board 331, it is obvious that the positions and number of the light emission parts 350 may vary according to consumer demands and design requirements. Meanwhile, the light emission parts 350 may operate by receiving power from a power supply part (not shown) which may be formed on the printed circuit board 331. The light emission parts 350 may also be mounted on the printed circuit board 331 in an area corresponding to the inner portion of the wheel 311.

When the wheel 311 is formed from a transparent or semi-transparent material, the light emission parts 350 may be formed in positions corresponding to the inner portion of the wheel 311, so that the light supplied by the light emission parts 350 is provided with greater brilliance.

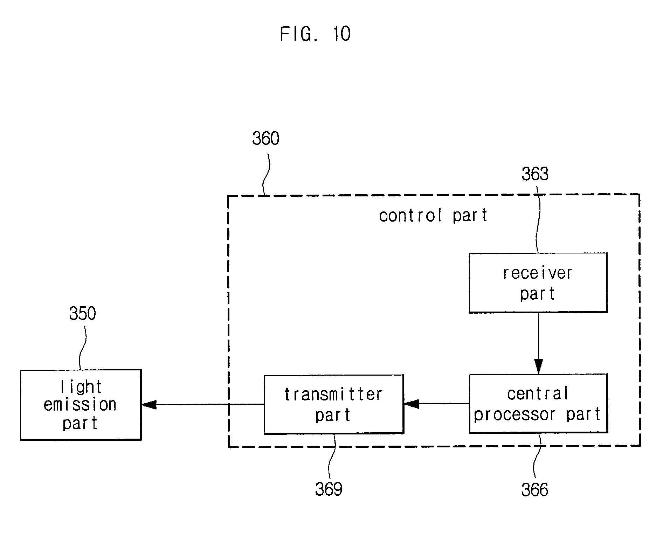

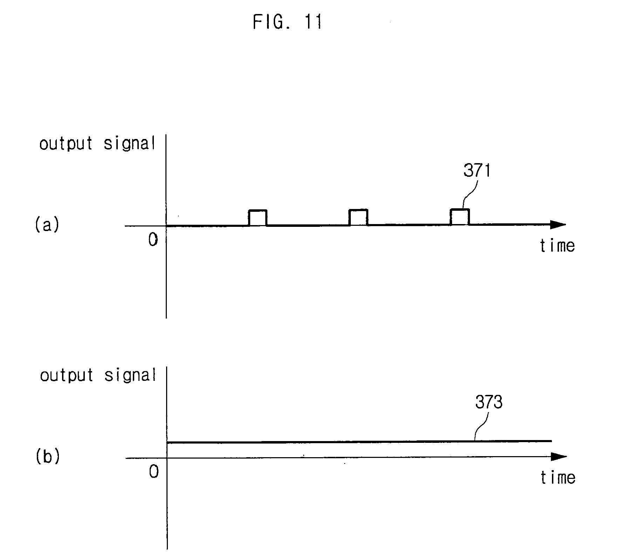

Fig. 10 is a block diagram illustrating the flow of signals in a rotary input apparatus according to the third disclosed embodiment of the invention, and Fig. 11 is a graph illustrating the forms of signals in a rotary input apparatus according to the third disclosed embodiment of the invention.

The control part 360 may comprise a receiver part 363 which receives signals, a central processor part 366 which processes the signals received from the receiver part 363, and a transmitter part 369 which transmits the control signals processed at the central processor part 366 to the light emission part 350. Using as an example the case where a rotary input apparatus according to the present embodiment is formed in a mobile terminal, when there are no signals received, such as during stand-by, the central processor part 366 may output pulse signals 371 of a designated period, and when there is a signal received, such as an incoming phone call or a received text message, such signals 373 may be outputted that maintain a high signal. Thus, during stand-by, the light emission parts 350 may provide a light that blinks in a designated period, whereas when a phone call is received, a light that does not blink but instead is continuously kept on is provided. While the present embodiment illustrates pulse signals 371 and signals that maintain a high signal, as signals outputted by the central processing part 366, it is obvious that various types of signals may be outputted according to consumer demands.

Receiving holes 337 are formed in the printed circuit board 331 in correspondence with the holder holes 320 of the holder 315, and at least a portion of the Hall sensor 335 is positioned in the receiving holes 337, as illustrated in Fig. 9. Thus, compared to the case of mounting the Hall sensor 335 on the upper surface of the printed circuit board 331, this embodiment may provide the additional effect of reducing the thickness of the input apparatus by the thickness of the receiving holes 337.

The detection element may be a Hall sensor (Hall effect sensor), which is a silicon semiconductor using the effect of electromotive forces generated when electrons experience the Lorentz force in a magnetic field such that their direction is curved. The Hall sensor generates electromotive forces that are proportional to the rotation of the magnet 313 attached to the wheel 311, which are transferred via the printed circuit board 331 to an outside control unit (not shown).

Of course, the detection element is not limited to a Hall sensor, and any element may be used which can detect the rotation of the magnet 313. For example, an MR (magneto-resistive) sensor or a GMR (giant magneto-resistive) sensor may be used for the detection element. An MR sensor or a GMR sensor is an element of which the resistance value is changed according to changes in the magnetic field, and utilizes the property that electromagnetic forces curve and elongate the carrier path in a solid to change the resistance. Not only are MR sensors or GMR sensors small in size with high signal levels, but also they have excellent sensitivity, to allow operation in low-level magnetic fields, and they are superior in terms of temperature stability.

When the detection element consists of a Hall sensor 335, the Hall sensor 335 is secured to the printed circuit board 331 by leads 336, where the leads 336 are inserted through the insertion holes 343 of the base 339 and secured to the reverse side of the printed circuit board 331.

The base 339, as illustrated in Fig. 8, has the shape of a circular plate, and rotatably supports the holder 315 and the wheel 311. The base 339 has fastening holes 341 around it in correspondence with the fastening portions 317 of the holder 315. The fastening portions 317 of the holder 315 are inserted into the fastening holes 341 of the base 339. Also, insertion holes 343 are formed on the base 339 in correspondence with the receiving holes 337 of the printed circuit board 331. A portion of the Hall sensor 335 is positioned in the insertion hole 343, whereby the thickness of the rotary input apparatus may further be reduced by the depth of the insertion holes 343.

Below, a description will be given of the operation of a rotary input apparatus according to the present embodiment.

When a rotational force is applied by a user on an outer side of the center key 329, the wheel 311 is rotated while positioned on the perimeter 322 of the holder 315, which causes the magnet 313 to rotate together with the wheel 311. As the magnet 313 has a multiple number of alternately magnetized N- and S-poles, the Hall sensor 335 can sense the changes in poles due to the rotation of the magnet 313, to recognize the rotation direction, speed, and angle of the wheel 311. The Hall sensor 335 generates output signals corresponding to the rotation direction, rotation angle, and rotation speed of the wheel 311, which are transmitted via the printed circuit board 331 to an outside control unit, and the control unit identifies the output signals to perform an input corresponding to the rotation of the wheel 311.

Also, when an outer side of the center key 329 is pressed by the user, the wheel 311 is tilted in one direction while elastically supported by the holder 315, which causes a push protrusion (not shown) formed on the reverse side of the holder 315 to press a dome button 333. This allows each of the dome buttons 333 positioned on the printed circuit board 331 to perform its own function. For example, in the input apparatus illustrated in Figs. 8 and 9, there are four dome buttons 333 in equal intervals that can be pressed by the push protrusions, where each dome button 333 may function as a hot key for launching a text message function, searching phone numbers, connecting to the Internet, or receiving satellite broadcasts, etc. In addition, the center key 329 may also perform a separate function when pressed by a user.

Meanwhile, according to this embodiment, when the rotary input apparatus is formed in a device, such as a cell phone, that is capable of receiving an externally received signal, the central processor part 366 outputs pulse signals 371 of a designated period during stand-by, where these pulse signals 371 are transferred through the transmitter part 369 to the light emission parts 350 to provide a light that blinks in a designated period. On the other hand, when a phone call or a text message is received, the central processor part 366 outputs signals 373 that maintain a high signal, which are transferred through the transmitter part 369 to the light emission parts 350 to provide a light in the rotary input apparatus that is continuously kept on.

The invention comprised as set forth above can provide a rotary input apparatus, in which the wheel and center key are illuminated by a light emission part, to provide improved convenience and greater aesthetic value.

While the present invention has been described with reference to particular embodiments, it is to be appreciated that various changes and modifications may be made by those skilled in the art without departing from the spirit and scope of the present invention, as defined by the appended claims and their equivalents.

## Claims

1. A rotary input apparatus, comprising:
a wheel having an insertion hole in a center thereof and having a wheel light transmission portion formed along an edge thereof;
a center key inserted into the insertion hole and having a center light transmission portion formed along an edge thereof;
a magnet joined to a surface of the wheel to co-operate with the wheel and magnetized to have alternating N- and S-poles;
a detection element positioned to face the magnet and configured to detect a rotation of the magnet;
a light emission part configured to diffuse light to the exterior through the wheel and the center key;
a printed circuit board having the detection element and the light emission part mounted thereon;
a base having the printed circuit board secured to a surface thereof; and
a holder joined to the base and interposed between the wheel and the base to rotatably support the wheel.

2. A rotary type input apparatus according to claim 1, wherein
the holder has at least one ledge and the wheel has at least one securing protrusion protruding downwards,
a washer having at least one rotation hole is inserted onto the center hole,
the at least one securing protrusion is rotatably inserted in the at least one rotation hole, and
light generated by the light emission part is reflected by a surface of the washer and diffused.

3. A rotary type input apparatus according to claim 1, wherein the washer comprises a light reflective material.

4. A rotary type input apparatus according to claim 1, wherein
a reflective sheet is stacked on the printed circuit board, and
the light emission part protrudes to the exterior of the reflective sheet.

5. A rotary type input apparatus according to claim 1, wherein the light emission part is mounted on the printed circuit board in an area corresponding to an inner portion of the wheel.

6. A rotary type input apparatus according to claim 1, wherein the wheel or the center key is manufactured from a light transmissive material.

7. A rotary input apparatus comprising:
a rotatable wheel;
a magnet joined to a surface of the wheel to co-operate with the wheel and magnetized to have alternating N- and S-poles;
a detection element positioned to face the magnet and configured to detect changes in magnetism of the magnet;
a printed circuit board having the detection element mounted thereon;
a light emission part mounted on the printed circuit board;
a control part configured to receive an external signal and control an operation of the light emission part correspondingly; and
a base having the printed circuit board secured thereto.

8. A rotary input apparatus according to claim 7, wherein
the base is joined to a mobile terminal, and
the control part is configured to receive an incoming call received by the mobile terminal.

9. A rotary input apparatus according to claim 8, wherein the control part
outputs a control signal that makes the light emission part maintain a lighting operation when the incoming call is received, and
outputs a control signal that makes the light emission part perform a blinking operation when the incoming call is not received.

10. A rotary input apparatus according to claim 7, wherein the wheel comprises a transparent material, and the light emission part is mounted on the printed circuit board in an area covered by the wheel.

11. A rotary input apparatus according to claim 7, wherein the light emission part comprises at least one of an LED (light emitting diode) and organic EL (organic electroluminescence).
